# EUROPEAN PATENT SPECIFICATION

(11) **EP 3 788 886 B1**
(45) Date of publication and mention of the grant of the patent: **17.11.2021**
(21) Application number: 19196009.5
(22) Date of filing: 06.09.2019
(51) Int. Cl.: A23L 27/30

(54) **A COMPOSITION SUITABLE FOR THE REPLACEMENT OF GLUCOSE-SYRUP**
ZUSAMMENSETZUNG ZUM ERSETZEN VON GLUCOSESIRUP
COMPOSITION APPROPRIÉE POUR LE REMPLACEMENT DU SIROP DE GLUCOSE

(43) Date of publication of application: 10.03.2021
(73) Proprietor: Cargill, Incorporated, Wayzata, MN 55391 (US)
(72) Inventor: Taskin, Burçak, 34746 Atasehir, Istanbul (TR); Can Saraclar, Yaman, 34746 Atasehir, Istanbul (TR)
(74) Representative: Jantschy, Jasmin

(56) References cited:
- US-A1- 2006 141 103
- US-A1- 2013 112 192
- US-A1- 2015 072 065
- US-A1- 2018 110 233
- Anonymous: "Triple Chocolate Ice Cream - No Sugar Added - SLOW CHURNED - EDY'S", , 1 May 2012 (2012-05-01), XP055664670, Retrieved from the Internet: URL:https://www.edys.com/products/slow-chu rned/triple-chocolate-no-sugar-added/slow- churned-no-sugar-added [retrieved on 2020-02-04]

## Description

### I. FIELD OF THE INVENTION

The invention relates to a glucose replacement composition for use in food applications, such as in bakery, beverages, ice cream, confectionery and the like.

### II. BACKGROUND

It is well known to utilize glucose syrups in the preparation of various products, such as baked goods. However, in view of the increasing obesity problem, and the rising rate of diabetes, there is a demand for sweetening compositions that can replace glucose syrups. There are a number of polyols, such as maltitol, that can be used in preparing foods, such as baked goods, beverages, ice cream, confectionery and the like.

However, polyols do not sufficiently mimic the properties of glucose syrup in terms of taste, texture, mouthfeel, viscosity, color, transparency etc. Furthermore, certain polyols have a laxative effect if ingested in high amounts.

It has been suggested, such as in WO2016171559A1, to combine a polyol with other bulking agents, such as oligosaccharides, maltodextrins, polydextrose and the like, for reducing the sugar content of a reference food product.

US2013/0112192 provides a low-viscosity reduced-sugar syrup, defined by the content of DP1+2, DP3-14 and DP11+ carbohydrates.

However, although these compositions may be suitable for reducing the sugar content of a food product, they do not satisfactorily replicate and mimic the physical properties, such as viscosity, color, transparency, texture and taste of glucose syrups, which are used in numerous food applications.

Accordingly, it is an object of the invention to provide a composition that would be particularly suitable for use in the preparation of foods and beverages to at least partially substitute glucose syrups. Accordingly, it is also an object of the invention to provide a composition that has similar physical properties (for example, viscosity, transparency and/or color) to glucose syrups.

Accordingly, it is also an object of the invention to provide a calorie-reducing composition for use in in the preparation of foods and beverages.

### III. SUMMARY OF THE INVENTION

The invention thus relates to a composition comprising, essentially consisting of or consisting of:
i. at least 80wt% of maltodextrin having a dextrose equivalence (DE) of from 15 to 20, preferably a DE of from 16 to 18; and
ii. up to 20wt% of sorbitol and glycerol;
wherein the weight percentages are determined on a dry weight basis.

The composition is suitable for the replacement of glucose-syrup in a food product. The invention also relates to a food product, such as a bakery product, a beverage, an ice cream, or a confectionery product, comprising the composition according to the invention, wherein said food product preferably does not comprise any glucose-syrup.

The invention furthermore relates to a process for preparing a composition comprising the steps of:
i. Adding sorbitol and glycerol to maltodextrin having a dextrose equivalence (DE) of from 15 to 20, preferably a DE of from 16 to 18 and;
ii. Mixing and heating the mixture from step (i) to a temperature of from 100-120°C, preferably 102-110°C, more preferably 103-108°C, most preferably 103-105°C;
to obtain a composition comprising at least 80wt% of the maltodextrin and at most 20wt% of both sorbitol and glycerol in total, wherein the weight percentages are determined on a dry weight basis.

The invention also covers the use of the composition according to the invention in a food product, preferably a bakery product, a confectionery product, a beverage or an ice cream. In particular, the composition can be used to replace at least partially nutritive mono- and disaccharides having an energy density of 4 kcal/g, preferably to replace at least partially glucose, sucrose and/or fructose, in a food product.

### IV. DETAILED DESCRIPTION OF THE INVENTION

The inventors have found that by combining a maltodextrin having a DE of from 15 to 20 with the two humectants, sorbitol and glycerol, a composition can be obtained that can be used to at least partially replace the glucose syrups used in many food applications.

### 1. The Maltodextrin

### 1.1. Maltodextrin properties

Any commercially available maltodextrin can be used, which has a DE dextrose equivalence (DE) of from 15 to 20, preferably 16 to 18, more preferably around 17. By maltodextrin it is generally meant herein NOT a resistant maltodextrin.

Preferably, the maltodextrin has a glucose (DP1) content of less than 5wt%, preferably less then 4wt%, even more preferably less than 3wt%, most preferably less than 2wt%.

Preferably, the maltodextrin has a maltose (DP2) content of less than 12wt%, preferably less then 10wt%, even more preferably less than 9wt%, most preferably less than 8wt%.

Preferably, the maltodextrin has a maltotriose (DP3) content of less than 16wt%, preferably less then 15wt%, even more preferably less than 14wt%, most preferably less than 13wt%.

Preferably, the maltodextrin has a DP4+ content of at least 65wt%, preferably at least 70wt%, even more preferably at least 75wt%, most preferably at least 80wt%. (DP4+ refers to a "degree of polymerization of at least 4 monosaccharides").

The maltodextrin preferably comprises a DP1 content of less than 5wt%, a DP2 content of less than 12wt%, a DP3 content of less than 16wt% and a DP4+ of least 67wt%. More preferably, the maltodextrin comprises a DP1 content of less than 4wt%, a DP2 content of less than 10wt%, a DP3 content of less than 15wt% and a DP4+ of least 71wt%. Even more preferably, the maltodextrin comprises a DP1 content of less than 3wt%, a DP2 content of less than 9wt%, a DP3 content of less than 14wt% and a DP4+ of least 75wt%. Most preferably, the maltodextrin comprises a DP1 content of less than 2wt%, a DP2 content of less than 8wt%, a DP3 content of less than 13wt% and a DP4+ of least 80wt%.

### 1.2. Amounts of maltodextrin in the composition

The maltodextrin is present in the composition of the invention at an amount of at least 80wt%. Preferably, the maltodextrin is present in an amount of at least 85wt%, 90wt%, 95wt%, 97wt% or 98wt% and/or at an amount of at most 99.9wt, 99.5wt%, 99.0wt%, 98.5wt% or 98wt%. The weight percentages are based on the dry weight basis of the composition.

The weight percentages are based on the dry weight basis of the composition.

### 2. Sorbitol

Sorbitol and glycerol are present in the composition in an amount of up to 20wt% of the composition based on the dry weight of the composition. For the avoidance of doubt, "up to 20wt% of sorbitol and glycerol" refers to the total amount of both sorbitol and glycerol in the composition.

Preferably, the composition according to the invention comprises up to 15wt%, 10wt%, 8wt% or 5wt% of sorbitol and/or at least 0.1wt%, 1wt%, 2wt%, 2.5wt% or 3wt% of sorbitol. The weight percentages are based on the dry weight basis of the composition.

Any commercially available (food grade) sorbitol can be used.

### 3. Glycerol

Preferably, the composition according to the invention comprises up to 15wt%, 10wt%, 8wt% or 5wt% of glycerol and/or at least 0.1wt%, 1wt%, 2wt%, 2.5wt% or 3wt% of glycerol. The weight percentages are based on the dry weight basis of the composition.

Any commercially available (food grade) glycerol can be used. Glycerol is also known under the names glycerine, glycerin, propanetriol, 1,2,3-trihydroxypropane or 1,2,3-propanetriol.

### 4. The Composition according to the Invention

Thus, the composition preferably comprises, essentially consists of, or consists of:
- at least 80wt%, 85wt%, 90wt%, 95wt%, 97wt% or 98wt% of maltodextrin;
- at least 0.1wt%, 1wt%, 2wt% or 3wt% and up to 10wt%, 8wt% or 5wt% of sorbitol;
- at least 0.1wt%, 1wt%, 2wt% or 3wt% and up to 10wt%, 8wt% or 5wt% of glycerol;
wherein the weight percentages are based on the dry weight basis of the composition. Any combination of the above amounts are hereby included.

Preferably, the sum of the amounts of maltodextrin, sorbitol and glycerol is 100wt%, wherein the weight percentages are based on the dry weight basis of the composition.

### 4.1. Transparency

It has been surprisingly found by the inventors that by gently heating and stirring the mixture of maltodextrin, sorbitol and glycerol in the amounts according to the invention at a temperature of 100 to 120°C, a transparent composition can be obtained.

This transparency is similar to the transparency of glucose syrups, making the composition an ideal substitute for glucose syrups in many different food applications, such as bakery products, confectionery products, beverages, ice cream and the like.

Furthermore, it has surprisingly been found that the transparency of the composition is stable and maintained over a long period of time.

It was found that the composition can remain transparent for at least 6 months or even at least 9 months or even at least 12 months. This allows the composition to be stored for long periods of time without suffering from changes in its appearance. This makes the use of the composition very versatile.

Transparency can be measured on a spectrophotometer and can be measured as percent transmittance (%T) or as Absorbance (A or Abs.) measured at specific wavelengths, typically at 280nm.

### 4.2. BRIX

The composition according to the invention preferably has a degrees BRIX of 70-85°, preferably 78-82°, as measured by refractometry. The BRIX can be used to determine the amount (in weight percent) of dry substance of the composition.

The composition according to the invention preferably has a dry substance content of from 70 to 95 wt%, preferably 75 to 90 wt%, more preferably 75 to 85 wt%.

### 4.3. Viscosity

The composition according to the invention preferably has
- a viscosity of 30000 to 80000 mPa·s at 30°C, more preferably 40000 to 75000 mPa·s at 30°C, most preferably 50000 to 73000 mPa·s at 30°C, and/or
- a viscosity of 10000 to 40000 mPa·s at 40°C, more preferably 12000 to 35000 mPa·s at 40°C, most preferably 12000 to 34000 mPa·s at 40°C, and/or
- a viscosity of 5000 to 15000 mPa·s at 50°C, more preferably 6000 to 12000 mPa·s at 50°C, most preferably 7000 to 12000 mPa·s at 50°C, and/or
- a viscosity of 2000 to 7000 mPa·s at 60°C, more preferably 2500 to 6000 mPa·s at 60°C, most preferably 2500 to 5500 mPa·s at 60°C;
as measured according to the Brookfield method, which is well known in the art. A Brookfield Viscometer/Rheometer can be used to measure the viscosity.

### 4.4. Color

The composition according to the invention preferably has color values of (L^{∗}, C^{∗} and h^{∗}) similar to glucose syrups as measured according to the CIE L^{∗}C^{∗}h color space model on a colorimeter. L^{∗} represents darkness/lightness from 0 to 100, C^{∗} represents saturation (=chroma) i.e. dullness to brightness from 0 to 1, and h represents the hue angle. The color is measured preferably at time 0 i.e. just after production, once the composition has cooled down to room temperature.

### 5. Process for Preparing the Composition

The process for preparing a composition according to the invention comprises the steps of:
i. Adding sorbitol and glycerol to maltodextrin having a dextrose equivalence (DE) of from 15 to 20, preferably a DE of from 16 to 18 and;
ii. Mixing and heating the mixture from step (i) to a temperature of from 100-120°C, preferably 102-110°C, more preferably 103-108°C, most preferably 103-105°C;
to obtain a composition comprising at least 80wt% of the maltodextrin and at most 20wt% of sorbitol and glycerol (i.e. in total, of both sorbitol and glycerol combined), wherein the weight percentages are determined on a dry weight basis

The heating temperature is key. The mixture should be heated until the composition reaches a temperature of from 100 to 120°C. Above 120°C, the components will begin to degrade and burn. Under 100°C, the composition does not achieve the right combination of BRIX, color, viscosity and transparency to be suitable for replacing or substituting glucose syrups. It has been found that the best combination of these properties is obtained when the mixture is heated to preferably 102-110°C, more preferably 103-108°C, most preferably 103-105°C, whilst mixing.

Mixing is preferably carried out gently with a stirrer in order to avoid the formation of foam.

The heating and mixing is preferably carried out until the desired temperature is achieved and the composition has become transparent with the desired degrees BRIX.

### 6. Use of the Composition in Food Products

The composition according to the invention is suitable for replacing at least partially nutritive mono- and disaccharides having an energy density of 4 kcal/g in a food product.

Preferably those mono- and disaccharides are glucose, sucrose or fructose.

More preferably, the composition according to the invention is suitable for replacing at least partially glucose syrups in a food product.

Thus the invention covers a food product comprising the composition according to the invention which preferably does not contain any glucose-syrup.

The food product can be selected from a bakery product, a confectionery product, a beverage or an ice cream, but is not limited to these examples.

### V. EXAMPLES OF THE INVENTION

### Examples according to the Invention

Sorbitol, glycerol, a liquid maltodextrin having a DE of 17, are first weighed to obtain the relative amounts of each component for the compositions of Examples 1 to 4 as indicated in the table below.

**Table 1**

| | Maltodextrin (wt%) | Sorbitol (wt%) | Glycerol (wt%) |
|---|---|---|---|
| Example 1 | 95 | 2.5 | 2.5 |
| Example 2 | 93 | 3.5 | 3.5 |
| Example 3 | 90 | 5 | 5 |
| Example 4 | 80 | 10 | 10 |

Sorbitol and glycerol are added to the liquid maltodextrin. The mixture is heated slowly up to 105°C while gently stirring. Heating and stirring is stopped once the target Brix of 78-82° is obtained. The composition obtained is a transparent, yellowish blend similar in color and transparency to a glucose syrup having a (dextrose equivalence) D.E. of about 40. These compositions can be used directly in the desired food application to substitute glucose syrups.

The properties of the compositions according to the invention are shown in the table below. These are comparable with a glucose syrup with a 40 DE. The glucose syrup 40 DE in Table 2 below has a dry substance of 80-81wt%, a glucose content of 14-20wt%, a DP2 content of 10-16wt% and a DP3 content of 10-14wt%, as measured on a dry substance basis.

Particularly, the viscosity at 50°C of Examples 1 to 4 is similar to the viscosity of the glucose syrup (11430, 9875 and 11380 mPa·s versus 8500 MPa·s). Example 4 shows that a viscosity of even less than the viscosity of the glucose syrup can be achieved.

Thus, the composition according to the invention is a surprisingly good substitute for glucose syrups in various food products. They adequately replicate the **texture and appearance** of glucose syrups, whilst maintaining **a sweet taste.**

**Table 2**

| | Viscosity at 30°C, mPa·s | Viscosity at 40°C, mPa·s | Viscosity at 50°C, mPa·s | Viscosity at 60°C, mPa·s | BRIX / ° |
|---|---|---|---|---|---|
| Example 1 | 72100 | 30450 | 11430 | 5133 | 78-82 |
| Example 2 | 70800 | 34150 | 9875 | 4633 | 78-82 |
| Example 3 | 66100 | 34200 | 11380 | 4220 | 78-82 |
| Example 4 | 33300 | 12530 | 5080 | 2405 | 78-82 |
| Glucose syrup (40 D.E.) | 49500 | 24000 | 8500 | 2500 | 78-82 |

By slightly altering the amounts of maltodextrin, sorbitol and glycerol it is also possible to find the right combination of properties to target the replacement of other glucose syrups, by way of example a glucose syrup of 60 D.E.

### Examples according to the prior art

Prior art examples include compositions comprising only maltodextrin and sorbitol or only maltodextrin and glycerol (as for instance in WO2016171559A1).

Comparative examples tested herein are the following:

**Table 3**

| | Maltodextrin (wt%) | Sorbitol (wt%) | Glycerol (wt%) |
|---|---|---|---|
| Comparative Example 1 | 99 | 1 | - |
| Comparative Example 2 | 97.5 | 2.5 | - |
| Comparative Example 3 | 95 | 5 | - |
| Comparative Example 4 | 99 | - | 1 |
| Comparative Example 5 | 97.5 | - | 2.5 |

As shown in the table below, these compositions do not provide the right properties to replicate the texture, appearance and taste of glucose syrups. Some of the samples were so thick that viscosity could not even be measured.

**Table 4**

| | Viscosity at 30°C, mPa·s | Viscosity at 40°C, mPa·s | Viscosity at 50°C, mPa·s | Viscosity at 60°C, mPa·s | BRIX / ° |
|---|---|---|---|---|---|
| Comparative Example 1 | N.M.^{∗} | 89600 | 34600 | 22400 | 78-82 |
| Comparative Example 2 | 97300 | 41250 | 24450 | 6753 | 78-82 |
| Comparative Example 3 | N.M.^{∗} | N.M.^{∗} | N.M.^{∗} | N.M.^{∗} | 78-82 |
| Comparative Example 4 | N.M.^{∗} | N.M.^{∗} | N.M.^{∗} | 94500 | 78-82 |
| Comparative Example 5 | N.M.^{∗} | N.M.^{∗} | N.M.^{∗} | N.M^{∗} | 78-82 |
| Glucose syrup (40D.E.) | 49500 | 24000 | 8500 | 2500 | 78-82 |

| | | | | | |
|---|---|---|---|---|---|
| *^{∗}NM = Not measurable. The composition was too thick to measure viscosity.* | | | | | |

## Claims

1. A composition comprising:
i. at least 80wt% of maltodextrin having a dextrose equivalence (DE) of from 15 to 20, preferably a DE of from 16 to 18; and
ii. up to 20wt% of sorbitol and glycerol;
wherein the weight percentages are determined on a dry weight basis.

2. The composition according to claim 1, comprising
i. Up to 10wt% of sorbitol, preferably 0.1 to 5wt% and
ii. Up to 10wt% of glycerol, preferably 0.1 to 5wt%,
wherein the weight percentages are determined on a dry weight basis.

3. The composition according to any one of the preceding claims wherein the composition has a BRIX of from 70 to 85°, more preferably from 78 to 82°.

4. The composition according to any one of the preceding claims wherein the composition has a viscosity of 30000 to 80000 mPa·s at 30°C as measured according to the Brookfield method.

5. The composition according to any one of the preceding claims wherein the composition has a viscosity of 10000 to 40000 mPa·s at 40°C as measured according to the Brookfield method.

6. The composition according to any one of the preceding claims wherein the composition has a viscosity of 5000 to 15000 mPa·s at 50°C as measured according to the Brookfield method.

7. The composition according to any one of the preceding claims wherein the composition is transparent.

8. The composition according to any one of the preceding claims suitable for replacing at least partially nutritive mono- and disaccharides having an energy density of 4 kcal/g, preferably glucose, sucrose or fructose, in a food product.

9. A food product comprising a composition according to any one of claims 1 to 8.

10. The food product according to claim 9, wherein the food product is a bakery product, a confectionery product, a beverage or an ice cream and wherein the food product preferably does not comprise any glucose-syrup.

11. A process for preparing a composition comprising the steps of:
iii. Adding sorbitol and glycerol to maltodextrin having a dextrose equivalence (DE) of from 15 to 20, preferably a DE of from 16 to 18 and;
iv. Mixing and heating the mixture from step (i) to a temperature of from 100-120°C, preferably 102-110°C, more preferably 103-108°C, most preferably 103-105°C;
to obtain a composition comprising at least 80wt% of maltodextrin and at most 20wt% of sorbitol and glycerol, wherein the weight percentages are determined on a dry weight basis.

12. The process according to claim 11 wherein mixing is carried out gently in order to avoid the formation of foam.

13. The process according to claims 11 or 12 wherein mixing and heating is carried out until the composition becomes transparent and/or has a BRIX of from 70 to 85°, more preferably from 78 to 82°.

14. Use of the composition according to any one of claims 1 to 8 in a food product, preferably a bakery product, a confectionery product, a beverage or an ice cream.

15. Use of the composition according to any one of claims 1 to 8 in a food product to replace at least partially nutritive mono- and disaccharides having an energy density of 4 kcal/g, preferably to replace at least partially glucose, sucrose and/or fructose.

## Patentansprüche

1. Zusammensetzung, umfassend:
i. mindestens zu 80 Gew.-% Maltodextrin, das eine Dextroseäquivalenz (DE) von 15 bis 20, vorzugsweise eine DE von 16 bis 18 aufweist; und
ii. bis zu 20 Gew.-% Sorbit und Glycerin;
wobei die Gewichtsprozentsätze auf Trockengewichtsbasis bestimmt sind.

2. Zusammensetzung nach Anspruch 1, umfassend
i. bis zu 10 Gew.-% Sorbit, vorzugsweise zu 0,1 bis 5 Gew.-% und
ii. bis zu 10 Gew.-% Glycerin, vorzugsweise zu 0,1 bis 5 Gew.-%,
wobei die Gewichtsprozentsätze auf Trockengewichtsbasis bestimmt sind.

3. Zusammensetzung nach einem der vorstehenden Ansprüche, wobei die Zusammensetzung einen BRIX-Wert von 70 bis 85°, mehr bevorzugt von 78 bis 82° aufweist.

4. Zusammensetzung nach einem der vorstehenden Ansprüche, wobei die Zusammensetzung eine Viskosität von 30000 bis 80000 mPa·s bei 30 °C, gemessen gemäß dem Brookfield-Verfahren, aufweist.

5. Zusammensetzung nach einem der vorstehenden Ansprüche, wobei die Zusammensetzung eine Viskosität von 10000 bis 40000 mPa·s bei 40 °C, gemessen gemäß dem Brookfield-Verfahren, aufweist.

6. Zusammensetzung nach einem der vorstehenden Ansprüche, wobei die Zusammensetzung eine Viskosität von 5000 bis 15000 mPa·s bei 50 °C, gemessen gemäß dem Brookfield-Verfahren, aufweist.

7. Zusammensetzung nach einem der vorstehenden Ansprüche, wobei die Zusammensetzung transparent ist.

8. Zusammensetzung nach einem der vorstehenden Ansprüche, die zum Ersetzen von zumindest teilweise nahrhaften Mono- und Disacchariden, die eine Energiedichte von 4 kcal/g aufweisen, vorzugsweise Glucose, Saccharose oder Fructose, in einem Nahrungsmittelprodukt geeignet ist.

9. Nahrungsmittelprodukt, umfassend eine Zusammensetzung nach einem der Ansprüche 1 bis 8.

10. Nahrungsmittelprodukt nach Anspruch 9, wobei das Nahrungsmittelprodukt ein Backprodukt, ein Süßwarenprodukt, ein Getränk oder eine Eiscreme ist und wobei das Nahrungsmittelprodukt vorzugsweise keinen Glucosesirup umfasst.

11. Verfahren zur Herstellung einer Zusammensetzung, umfassend die Schritte:
iii. Hinzufügen von Sorbit und Glycerin zu Maltodextrin, das eine Dextroseäquivalenz (DE) von 15 bis 20, vorzugsweise eine DE von 16 bis 18, aufweist, und;
iv. Mischen und Erwärmen der Mischung aus Schritt (i) auf eine Temperatur von 100-120 °C, vorzugsweise 102-110 °C, mehr bevorzugt 103-108 °C, am meisten bevorzugt 103-105 °C;
um eine Zusammensetzung zu erhalten, die mindestens zu 80 Gew.-% Maltodextrin und höchstens zu 20 Gew.-% Sorbit und Glycerin umfasst, wobei die Gewichtsprozentsätze auf Trockengewichtsbasis bestimmt sind.

12. Verfahren nach Anspruch 11, wobei das Mischen schonend ausgeführt wird, um die Bildung von Schaum zu vermeiden.

13. Verfahren nach den Ansprüchen 11 oder 12, wobei das Mischen und Erwärmen ausgeführt wird, bis die Zusammensetzung transparent wird und/oder einen BRIX-Wert von 70 bis 85°, mehr bevorzugt von 78 bis 82°, aufweist.

14. Verwendung der Zusammensetzung nach einem der Ansprüche 1 bis 8 in einem Nahrungsmittelprodukt, vorzugsweise einem Backprodukt, einem Süßwarenprodukt, einem Getränk oder einer Eiscreme.

15. Verwendung der Zusammensetzung nach einem der Ansprüche 1 bis 8 in einem Nahrungsmittelprodukt, um zumindest teilweise nahrhafte Mono- und Disaccharide, die eine Energiedichte von 4 kcal/g aufweisen, zu ersetzen, vorzugsweise um zumindest teilweise Glucose, Saccharose und/oder Fructose zu ersetzen.

## Revendications

1. Composition comprenant :
i. au moins 80 % en poids de maltodextrine ayant une équivalence en dextrose (DE) allant de 15 à 20, de préférence une DE allant de 16 à 18 ; et
ii. jusqu'à 20 % en poids de sorbitol et de glycérol ;
dans laquelle les pourcentages en poids sont déterminés sur la base d'un poids sec.

2. Composition selon la revendication 1, comprenant
i. Jusqu'à 10 % en poids de sorbitol, de préférence de 0,1 à 5 % en poids et
ii. Jusqu'à 10 % en poids de glycérol, de préférence de 0,1 à 5 % en poids,
dans laquelle les pourcentages en poids sont déterminés sur la base d'un poids sec.

3. Composition selon l'une quelconque des revendications précédentes, dans laquelle la composition a un BRIX allant de 70 à 85°, plus préférablement de 78 à 82°.

4. Composition selon l'une quelconque des revendications précédentes, dans laquelle la composition a une viscosité de 30 000 à 80 000 mPa·s à 30 °C telle que mesurée selon le procédé Brookfield.

5. Composition selon l'une quelconque des revendications précédentes, dans laquelle la composition a une viscosité de 10 000 à 40 000 mPa·s à 40 °C telle que mesurée selon le procédé Brookfield.

6. Composition selon l'une quelconque des revendications précédentes, dans laquelle la composition a une viscosité de 5 000 à 15 000 mPa·s à 50 °C telle que mesurée selon le procédé Brookfield.

7. Composition selon l'une quelconque des revendications précédentes, dans laquelle la composition est transparente.

8. Composition selon l'une quelconque des revendications précédentes, appropriée pour remplacer au moins partiellement des monosaccharides et des disaccharides nutritifs ayant une densité énergétique de 4 kcal/g, de préférence du glucose, du saccharose ou du fructose, dans un produit alimentaire.

9. Produit alimentaire comprenant une composition selon l'une quelconque des revendications 1 à 8.

10. Produit alimentaire selon la revendication 9, dans lequel le produit alimentaire est un produit de boulangerie, un produit de confiserie, une boisson ou une crème glacée et dans lequel le produit alimentaire ne comprend de préférence aucun sirop de glucose.

11. Procédé de préparation d'une composition comprenant les étapes consistant à :
iii. Ajouter du sorbitol et du glycérol à de la maltodextrine ayant une équivalence en dextrose (DE) allant de 15 à 20, de préférence une DE allant de 16 à 18 et ;
iv. Mélanger et chauffer le mélange de l'étape (i) à une température allant de 100 à 120 °C, de préférence de 102 à 110 °C, plus préférablement de 103 à 108 °C, le plus préférablement de 103 à 105 °C ;
pour obtenir une composition comprenant au moins 80 % en poids de maltodextrine et au plus 20 % en poids de sorbitol et de glycérol, dans lequel les pourcentages en poids sont déterminés sur la base d'un poids sec.

12. Procédé selon la revendication 11, dans lequel le mélange est effectué doucement afin d'éviter la formation de mousse.

13. Procédé selon les revendications 11 ou 12, dans lequel le mélange et le chauffage sont effectués jusqu'à ce que la composition devienne transparente et/ou ait un BRIX allant de 70 à 85°, plus préférablement de 78 à 82°.

14. Utilisation de la composition selon l'une quelconque des revendications 1 à 8 dans un produit alimentaire, de préférence un produit de boulangerie, un produit de confiserie, une boisson ou une crème glacée.

15. Utilisation de la composition selon l'une quelconque des revendications 1 à 8 dans un produit alimentaire pour remplacer au moins partiellement des monosaccharides et des disaccharides nutritifs ayant une densité énergétique de 4 kcal/g, de préférence pour remplacer au moins partiellement du glucose, du saccharose et/ou du fructose.
